# EUROPEAN PATENT APPLICATION

(11) **EP 3 029 952 A1**
(43) Date of publication of application: **08.06.2016**
(21) Application number: 15197646.1
(22) Date of filing: 02.12.2015
(51) Int. Cl.: H04N 21/482, H04N 21/27, H04N 21/442

(54) **DISPLAY APPARATUS, METHOD OF DISPLAYING CHANNEL LIST PERFORMED BY THE SAME, SERVER, AND CONTROL METHOD PERFORMED BY THE SERVER**

(30) Priority: 05.12.2014 KR 20140174089
(71) Applicant: Samsung Electronics Co., Ltd., Gyeonggi-do 16677 (KR)
(72) Inventor: PARK, Seong-ho, Gyeonggi-do (KR); KIM, Moon-su, Gyeonggi-do (KR); PARK, Hee-dong, Seoul (KR); CHOI, Jong-il, Seoul (KR); HWANG, Yun-sung, Seoul (KR)
(74) Representative: Taor, Simon Edward William

(57) **Abstract**

A display apparatus is provided. The display apparatus includes a display, a communication unit for communicating with a server, and a processor for, if viewer rating metadata calculated based on viewing information of broadcasting content and web content is received from the server, displaying a channel list included in the viewing rating metadata through the display. The channel list is a channel list in which the broadcasting content and the web content are listed in order of viewer ratings.

## Description

One or more embodiments relate to a display apparatus, a method of displaying a channel list performed by the same, a server, and a control method performed by the server, and more particularly, to a display apparatus for displaying a channel list, a method of displaying the channel list performed by the display apparatus, a server, and a control method performed by the server.

Owing to a development of an electronic technology, users have been provided with not only broadcasting content through a TV but also web content over the Internet.

Thus, users may be easily provided with various pieces of content through the TV, whereas users may not be able to easily check which content is popular to other users due to a great amount of content.

Accordingly, it is requested to find a way to provide users with popular content.

One or more exemplary embodiments overcome the above disadvantages and other disadvantages not described above. However, one or more exemplary embodiments are not required to overcome the disadvantages described above, and an exemplary embodiment of the present disclosure need not overcome any of the problems described above.

In an aspect of one or more exemplary embodiments, there is provided a display apparatus capable of providing a user with a channel list in which broadcasting content and web content are listed in order of viewing ratings, a method of displaying the channel list performed by the same, a server, and a control method performed by the server.

In an aspect of one or more exemplary embodiments, there is provided a display apparatus which includes a display, a communication unit configured to communicate with a server, and a processor configured to control the display to display a channel list included in viewer rating metadata, if viewer rating metadata calculated based on viewing information of broadcasting content and web content is received from the server, wherein the viewer rating metadata includes viewer ratings, and wherein the channel lists the broadcasting content and the web content in order of viewer ratings.

If updated viewer rating metadata is received from the server, the processor may display an updated channel list included in the updated viewer rating metadata.

The processor may determine broadcasting content that a user is watching through the display apparatus based on broadcasting metadata received from the server and transmit viewing information of the broadcasting content that the user is watching to the server.

The server may calculate viewer ratings of the broadcasting content and the web content based on viewing information of the broadcasting content received from the display apparatus and viewing information of the web content received from a content provider and generate viewer rating metadata based on the calculated viewer ratings to transmit the viewer rating metadata to the display apparatus.

The server may unite broadcasting content and web content by assigning different weights to viewing information of the broadcasting content and the web content in order to determine viewer rating rankings of broadcasting content and web content and to generate the channel list based on the viewer rating rankings.

The processor may control the display to display content included in the channel list every preset time.

The preset time is at least one of each regular time interval and each time broadcasting content that the display apparatus receives changes.

The display apparatus may be one of a television, a personal computer, a tablet, and mobile phone.

The processor may control the display to display content included in the channel list at the request of a user.

In an aspect of one or more exemplary embodiments, there is provided a server which includes a communication unit configured to communicate with a display apparatus; and a processor configured to calculate viewer ratings of broadcasting content and web content based on viewing information of the broadcasting content and the web content and configured to generate viewer rating metadata based on the calculated viewer ratings to transmit the generated viewer rating metadata to the display apparatus through the communication unit, wherein the viewer rating metadata includes viewer ratings, and wherein the viewer rating metadata includes a channel list in which the broadcasting content and the web content are listed in order of viewer ratings.

The server may unite broadcasting content and web content by assigning different weights to viewing information of the broadcasting content and the web content in order to determine viewer rating rankings of broadcasting content and web content and to generate the channel list based on the viewer rating rankings.

The processor may calculate the viewer ratings based on the viewing information of the broadcasting content received from the display apparatus and the viewing information of the web content received from a content provider.

The processor may determine broadcasting content that is currently being watched in the display apparatus based on the viewing information of the broadcasting content and previously stored broadcasting metadata to calculate a viewer rating of the broadcasting content, calculate a viewer rating of the web content based on the viewing information of the web content, and may generate a viewer rating metadata based on the calculated viewer ratings of the broadcasting content and the web content.

If the viewing information of the broadcasting content and the web content is updated, the processor may update the viewer rating metadata based on the updated viewing information and transmit the updated viewer rating metadata to the display apparatus.

In an aspect of one or more exemplary embodiments, there is provided a method of displaying a channel list performed by a display apparatus includes receiving viewer rating metadata calculated based on viewing information of broadcasting content and web content from a server; and displaying the channel list included in the viewer rating metadata, wherein the viewer rating metadata includes viewer ratings, and wherein the channel list lists the broadcasting content and the web content in order of viewer ratings.

If updated viewer rating metadata is received from the server, the displaying may include displaying an updated channel list included in the updated viewer rating metadata.

The method may further include determining broadcasting content that a user is watching through the display apparatus based on broadcasting metadata received from the server and transmitting viewing information of the broadcasting content that the user is watching to the server.

The server may calculate viewer ratings of the broadcasting content and the web content based on viewing information of the broadcasting content received from the display apparatus and viewing information of the web content received from a content provider and may generate viewer rating metadata based on the calculated viewer ratings to transmit the generated viewer rating metadata to the display apparatus.

The displaying may include displaying content included in the channel list every preset time.

The display apparatus may be one of a television, a personal computer, a tablet, and mobile phone.

The preset time is at least one of each regular time interval and each time broadcasting content that the display apparatus receives changes.

In an aspect of one or more exemplary embodiments, there is provided a control method performed by a server includes calculating viewer ratings of broadcasting content and web content based on viewing information of the broadcasting content and the web content and generating viewer rating metadata based on the calculated viewer ratings; and transmitting the generated viewer rating metadata to a display apparatus, wherein the viewer rating metadata includes a channel list in which the broadcasting content and the web content are listed in order of viewer ratings.

The generating may include calculating the viewer ratings based on viewing information of the broadcasting content received from the display apparatus and viewing information of the web content received from a content provider.

The generating may include determining broadcasting content that is currently being watched in the display apparatus based on the viewing information of the broadcasting content and previously stored broadcasting metadata to calculate the viewer rating of the broadcasting content, calculating the viewer rating of the web content based on the viewing information of the web content, and generating the viewer rating metadata based on the calculated viewer ratings of the broadcasting content and the web content.

The control method may further include if the viewing information of the broadcasting content and the web content is updated, updating the viewer rating metadata based on the updated viewing information; and transmitting the updated viewer rating metadata to the display apparatus.

In an aspect of one or more exemplary embodiments, there is provided at least one non-transitory computer readable medium storing computer readable instructions which when executed implement methods of one or more embodiments.

The above and/or other aspects will be more apparent by describing exemplary embodiments with reference to the accompanying drawings, in which:
FIG. 1 is a diagram for describing a system providing a channel list on the basis of real-time viewing ratings according to an exemplary embodiment;
FIG. 2 is a block diagram for describing a configuration of a server according to an exemplary embodiment;
FIG. 3 is a diagram for describing a case where a server is implemented as a plurality of servers according to an exemplary embodiment;
FIGS. 4A and 4B are block diagrams for describing a configuration of a display apparatus according to exemplary embodiments;
FIG. 5 is a diagram of a channel list according to an exemplary embodiment;
FIG. 6 is a diagram for describing an example of performing automatic content conversion according to an exemplary embodiment;
FIGS. 7A through 7C are diagrams for describing a method of setting a channel list according to exemplary embodiments;
FIG. 8 is a flowchart of a method in which a display apparatus displays a channel list according to an exemplary embodiment; and
FIG. 9 is a flowchart of a control method performed by a server according to an exemplary embodiment.

Reference will now be made in detail to exemplary embodiments, examples of which are illustrated in the accompanying drawings, wherein like reference numerals refer to the like elements throughout. Exemplary embodiments are described below to explain the present disclosure by referring to the figures.

Exemplary embodiments of the present disclosure may be diversely modified. Accordingly, specific exemplary embodiments are illustrated in the drawings and are described in detail in the detailed description. However, it is to be understood that the present disclosure is not limited to a specific exemplary embodiment, but includes all modifications, equivalents, and substitutions without departing from the scope and spirit of the present disclosure. Also, well-known functions or constructions are not described in detail since they would obscure the disclosure with unnecessary detail.

The terms "first", "second",etc. may be used to describe diverse components, but the components are not limited by the terms. The terms are only used to distinguish one component from the others.

The terms used in the present application are only used to describe the exemplary embodiments, but are not intended to limit the scope of the disclosure. The singular expression also includes the plural meaning as long as it does not differently mean in the context. In the present application, the terms "include" and "consist of" designate the presence of features, numbers, steps, operations, components, elements, or a combination thereof that are written in the specification, but do not exclude the presence or possibility of addition of one or more other features, numbers, steps, operations, components, elements, or a combination thereof.

In exemplary embodiments, a "module" or a "unit" performs at least one function or operation, and may be implemented with hardware, software, or a combination of hardware and software. In addition, a plurality of "modules" or a plurality of "units" may be integrated into at least one module except for a "module" or a "unit" which has to be implemented with specific hardware, and may be implemented with at least one processor (not shown).

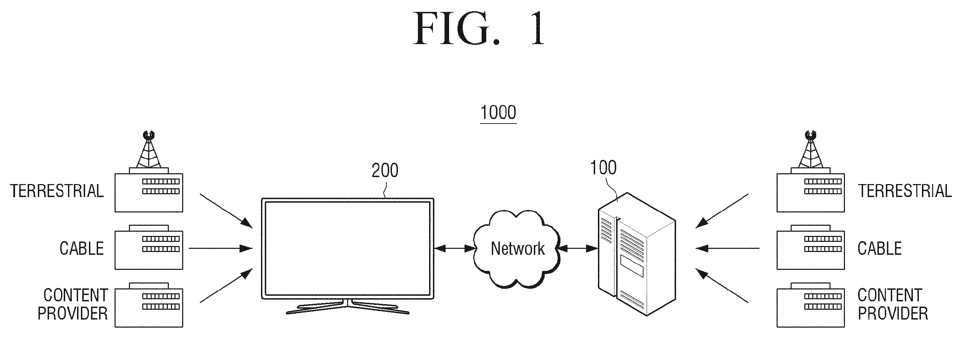

FIG. 1 is a diagram for describing a system 1000 providing a channel list on the basis of real-time viewer ratings (viewing ratings) according to an exemplary embodiment. Referring to FIG. 1, the system 1000 may include a server 100 and a display apparatus 200.

The display apparatus 200 may receive broadcasting content from a terrestrial broadcasting station, a cable broadcasting station, etc. to provide a user with the broadcasting content as well as access a web server (not shown) over the Internet to receive web content provided by a content provider and provide the user with the web content.

Such the display apparatus 200 may be implemented as a TV but embodiments of the invention are not limited thereto. The display apparatus 200 may be implemented as various types of apparatuses having a function of receiving and displaying content from various sources such as a smart phone, a tablet PC, a PC, etc.

The display apparatus 200 may communicate with the server 100 over a network 10 such as the Internet to receive viewer rating metadata (viewing rating metadata) and display the channel list included in the viewer rating metadata.

In this regard, the viewer rating metadata may include the channel list in which the broadcasting content and the web content are listed in order of viewer ratings and metadata regarding content included in the channel list.

To this end, the server 100 may determine which broadcasting content users are currently watching based on viewing information received from not only the display apparatus 200 but also another display apparatus (not shown) capable of communicating with the server 100 and calculate viewer rating of the broadcasting content.

The server 100 may determine which web content users have watched based on viewing information of web content received from the web server (not shown) and calculate viewer rating of the web content.

Accordingly, the server 100 may create (generate) the channel list indicating the broadcasting content and the web content in order of viewer ratings based on the calculated viewer ratings and transmit the created channel list and the metadata regarding the content included in the channel list to the display apparatus 200.

The display apparatus 200 may display the channel list received from the server 100 to provide the user with the channel list.

The display apparatus 200 may use the metadata regarding the content included in the channel list to sequentially display the content included in the channel list every preset time or display the content selected by the user from the channel list.

Accordingly, users may be provided with the broadcasting content and the web content having high viewer ratings according to the viewer ratings calculated in real time.

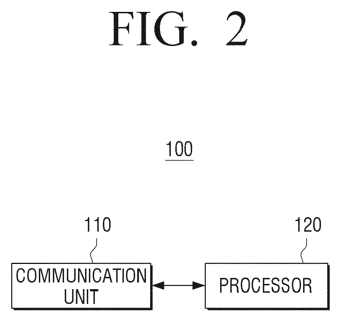

FIG. 2 is a block diagram for describing a configuration of the server 100 according to an exemplary embodiment. Referring to FIG. 2, the server 100 may include a communication unit 110 and a processor 120.

The communication unit 110 may communicate with the display apparatus 200 and another display apparatus (not shown). For example, the communication unit 110 may communicate with the display apparatus 200 and another display apparatus (not shown) over the Internet.

The communication unit 110 may communicate with a web server (not shown). For example, the communication unit 110 may communicate with the web server (not shown) used for a content provider to provide web content over the Internet.

The communication unit 110 may include a communication module for connection with the Internet.

The processor 120 may perform a function of controlling a general operation of the server 100.

For example, the processor 120 may calculate viewer ratings of broadcasting content and web content based on viewing information of the broadcasting content and the web content, create viewer rating metadata based on the calculated viewer ratings, and transmit the created viewer rating metadata to the display apparatus 200 through the communication unit 110.

For example, the processor 120 may transmit the viewer rating metadata to the display apparatus 200 every preset time or transmit the viewer rating metadata to the display apparatus 200 according to a request of the display apparatus 200. The preset time may be a regular time interval or a case where viewer rating of at least one of the broadcasting content and the web content is changed.

The viewer rating metadata may include a channel list in which the broadcasting content and the web content are listed in order of viewer ratings and metadata regarding content included in the channel list.

The processor 120 may transmit broadcasting metadata regarding the broadcasting content to the display apparatus 200 through the communication unit 110. The processor 120 may transmit the broadcasting metadata to another display apparatus (not shown) capable of communicating with the server 100, in addition to the display apparatus 200.

For example, the broadcasting metadata may include information regarding broadcasting content broadcasted in a terrestrial channel and a cable channel, for example, a title of broadcasting content, a broadcasting time, a channel number, a cast, a genre, a story, a preference, a program ID, etc. The server 100 may receive and store the broadcasting metadata from a terrestrial broadcasting station, a cable broadcasting station, etc.

For example, the display apparatus 200 and another display apparatus (not shown) may determine broadcasting content that users are currently watching based on the broadcasting metadata received from the server 100 and transmit viewing information of the broadcasting content that users are currently watching to the server 100.

For example, the viewing information of the broadcasting content may include, for example, identification information for identifying the broadcasting content such as the unique program ID allocated to the broadcasting content.

The server 100 may receive and store viewing information of web content received from the web server (not shown).

For example, the viewing information of the web content may include the view number of the web content reproduced for users to watch the web content. The viewing information of the web content may include information regarding a title of the web content, a writer, a genre, a reproduction time, a preference, a content ID, a URL, etc.

The processor 120 may calculate viewer ratings of the broadcasting content and the web content based on the viewing information of the broadcasting content received from the display apparatus 200 and the viewing information of the web content received from the content provider.

The processor 120 may determine broadcasting content that is currently being watched in the display apparatus 200 based on the viewing information of the broadcasting content and previously stored broadcasting metadata to calculate a viewer rating of the broadcasting content. For example, the processor 120 may determine broadcasting content that is currently being watched in another display apparatus (not shown) in addition to the display apparatus 200 to calculate a viewer rating of the broadcasting content.

For example, the processor 120 may determine the same program ID as a program ID received from the display apparatus 200 and another display apparatus (not shown) among program IDs included in the previously stored broadcasting metadata and may determine broadcasting content having the corresponding program ID as broadcasting content that users of the display apparatus 200 and another display apparatus (not shown) are currently watching, i.e., broadcasting content that the display apparatus 200 and another display apparatus (not shown) are currently displaying.

The processor 120 may calculate a viewer rating of the broadcasting content that users are currently watching.

In this regard, the viewer rating of the broadcasting content may refer to the number of display apparatuses that display the corresponding broadcasting content.

Accordingly, the processor 120 may count the number of display apparatuses that display corresponding broadcasting content for each piece of broadcasting content and may calculate the viewer rating of the broadcasting content.

The processor 120 may calculate a viewer rating of web content based on viewing information of the web content.

In this regard, the viewer rating of the web content may refer to the view number of the web content.

Accordingly, the processor 120 may determine the view number for each piece of web content using the viewing information of the web content to calculate the viewer rating of the web content.

The processor 120 may create viewer rating metadata based on the viewer ratings of the broadcasting content and the web content.

The viewer rating metadata may include a channel list in which the broadcasting content and the web content are listed in order of viewer ratings and metadata regarding each content included in the channel list.

The metadata regarding each content may include a title of broadcasting content, a broadcasting time, a channel number, a cast, a genre, a story, a preference, a program ID, etc. in case of the broadcasting content, and may include a title of the web content, a writer, a genre, a reproduction time, a preference, a content ID, a URL, etc. in case of the web content.

For example, the processor 120 may unite the broadcasting content and the web content to create the channel list in order of high viewer ratings and may extract the metadata of the content included in the channel list from broadcasting metadata provided from a broadcasting station (not shown) and viewing information of the web content provided from a web server (not shown) to create the viewer rating metadata.

Since the broadcasting content and the web content have different viewing environments, the processor 120 may assign different weights to the viewer ratings of the broadcasting content and the web content, may determine a viewer rating ranking (viewing rating ranking) of the broadcasting content and the web content based on the viewer ratings of the broadcasting content and the web content to which the weights are assigned, and may create the channel list according to the determined viewer rating ranking.

For example, the processor 120 may calculate a ratio between the view number of all web content included in the viewing information of the web content and the number of display apparatuses that transmit the viewing information to the server 100 and may assign weights that are inversely proportional to the calculated ratio to the broadcasting content and the web content.

As an example, it is assumed that the total view number of the web content is a, the number of display apparatuses that transmit the viewing information to the server 100 is b, and the ratio therebetween is a:b.

In this case, the processor 120 may multiply the viewer rating of the broadcasting content by a/b in order to assign a weight as much as a/b to the viewer rating of the broadcasting content. Alternatively, the processor 120 may multiply the viewer rating of the web content by b/a in order to assign a weight as much as b/a to the viewer rating of the web content. The processor 120 may create a channel list of content in order of high viewer ratings based on the viewer ratings to which weights are assigned.

If the viewing information of the broadcasting content and the web content is updated, the processor 120 may update the viewer rating metadata based on the updated viewing information and may transmit the updated viewer rating metadata to the display apparatus 200.

That is, broadcasting content and web content that users watch may be changed in real time, and thus viewer ratings of the broadcasting content and the web content may be changed in real time.

Therefore, the processor 120 may receive the viewing information of the broadcasting content and the web content updated at each preset time, may rerecalculate the viewer ratings of the broadcasting content and the web content to update the viewer rating metadata, and may transmit the updated viewer rating metadata to the display apparatus 200.

The preset time may be a regular time interval. The preset time may be a time when broadcasting content that users watch through the display apparatus 200 and another display apparatus (not shown) is changed or a time when the view number of web content is changed.

For example, every regular time interval or when broadcasting content that the display apparatus 200 displays is changed, the display apparatus 200 may transmit viewing information of the changed broadcasting content to the server 100. Every regular time interval or when the view number of web content is changed, a web server (not shown) may transmit viewing information including the changed view number of the web content to the server 100.

Although the server 100 is implemented as one server in the example described above, this is merely an example. The server 100 may be implemented as a plurality of servers according to a function performed by each server.

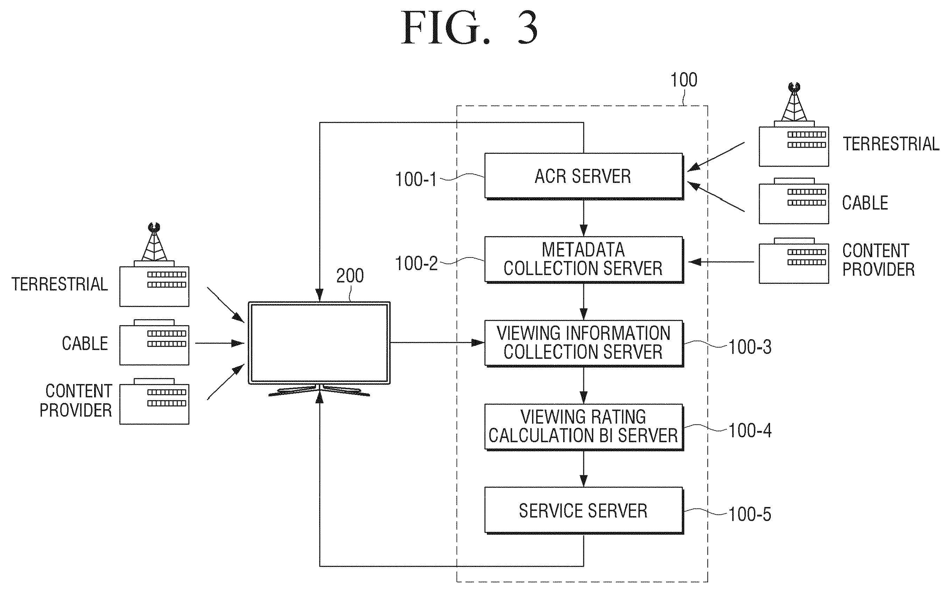

A case where the server 100 is implemented as a plurality of servers will now be described in more detail with reference to FIG. 3 below. When describing FIG. 3, detailed descriptions of redundant parts between FIGS. 1 and 2 and FIG. 3 will be omitted. Servers illustrated in FIG. 3 may be connected to each other over a network (not shown), may respectively include a communication module and a processor for performing a corresponding function according to the function thereof, and may respectively include a storage module for storing various pieces of data as needed.

Referring to FIG. 3, the server 100 may include an auto content recognition (ACR) server 100-1, a metadata collection server 100-2, a viewing information collection server 100-3, a viewer rating calculation business intelligence (BI) server 100-4, and a service server 100-5.

The ACR server 100-1 may receive broadcasting metadata of broadcasting content from a terrestrial broadcasting station and a cable broadcasting station and store the broadcasting metadata of the broadcasting content. In this case, the ACR server 100-1 may receive the broadcasting metadata of the broadcasting content every preset time.

The ACR server 100-1 may transmit the broadcasting metadata of the broadcasting content to the display apparatus 200 and the metadata collection server 100-2.

The metadata collection server 100-2 may receive the broadcasting metadata of the broadcasting content from the ACR server 100-1 and may store the broadcasting metadata of the broadcasting content.

The metadata collection server 100-2 may receive viewing information of web content from a content provider and may store the viewing information of the web content. In this case, the metadata collection server 100-2 may receive the viewing information of the web content every preset time.

The metadata collection server 100-2 may transmit the viewing information of the web content received from the content provider and the broadcasting metadata received from the ACR server 100-1 to the viewing information collection server 100-3.

The viewing information collection server 100-3 may receive the broadcasting metadata and the viewing information of the web content from the metadata collection server 100-2 and may store the broadcasting metadata and the viewing information of the web content.

The viewing information collection server 100-3 may receive viewing information of the broadcasting content from the display apparatus 200 and another display apparatus (not shown) and may store the viewing information of the broadcasting content. In this case, the viewing information collection server 100-3 may receive the viewing information of the broadcasting content every preset time.

The viewing information collection server 100-3 may transmit the viewing information of the broadcasting content, the broadcasting metadata, and the viewing information of the web content to the viewer rating calculation BI server 100-4.

The viewer rating calculation BI server 100-4 may receive the viewing information of the broadcasting content, the broadcasting metadata, and the viewing information of the web content from the viewing information collection server 100-3, may store the viewing information of the broadcasting content, the broadcasting metadata, and the viewing information of the web content, and may calculate viewer ratings based on the viewing information of the broadcasting content and the web content.

In this case, since the viewing information of the broadcasting content, the broadcasting metadata, and the viewing information of the web content may be collected in real time every preset time and may be transferred to the viewer rating calculation BI server 100-4, the viewer rating calculation BI server 100-4 may use the viewing information of the broadcasting content, the broadcasting metadata, and the viewing information of the web content as big data to calculate the viewer ratings of the broadcasting content and the web content.

The viewer rating calculation BI server 100-4 may transmit the broadcasting metadata of the broadcasting content, the viewing information of the web content, and the calculated viewer rating information of the broadcasting content and the web content to the service server 100-5.

The service server 100-5 may receive the broadcasting metadata of the broadcasting content, the viewing information of the web content, and the calculated viewer rating information of the broadcasting content and the web content from the viewer rating calculation BI server 100-4, may store the broadcasting metadata of the broadcasting content, the viewing information of the web content, and the calculated viewer rating information of the broadcasting content and the web content, and may generate viewer rating metadata based on the broadcasting metadata of the broadcasting content, the viewing information of the web content, and the calculated viewer rating information of the broadcasting content and the web content.

The service server 100-5 may transmit the generated viewer rating metadata to the display apparatus 200.

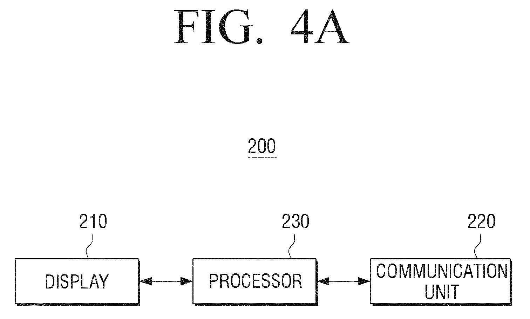

FIG. 4A is a block diagram for describing a configuration of the display apparatus 200 according to an exemplary embodiment. Referring to FIG. 4A, the display apparatus 200 may include a display 210, a communication unit 220, and a processor 230.

The display 210 may display a screen. In this regard, the screen may include broadcasting content and web content that are configured as images, moving images, text, etc.

In particular, the display 210 may display a channel list created based on viewer ratings. This will be described in detail later.

The communication unit 220 may communicate with the server 100. For example, the communication unit 220 may communicate with the server 100 over the Internet to receive broadcasting metadata and viewer rating metadata and may transmit viewing information of broadcasting content to the server 100.

The communication unit 220 may communicate with a web server (not shown). For example, the communication unit 220 may communicate with the web server (not shown) over the Internet to receive web content provided by a content provider.

To this end, the communication unit 220 may include a communication module for connection with the Internet.

The processor 230 may perform a function of controlling a general operation of the display apparatus 200. To this end, the processor 230 may include a central processing unit (CPU), for an operation of the display apparatus 200, a random access memory (RAM) and a read only memory (ROM).

In particular, if the processor 230 receives the viewer rating metadata calculated based on the viewing information of the broadcasting content and the web content from the server 100, the processor 230 may display the channel list included in the viewer rating metadata through the display 210.

In this case, the viewer rating metadata may be received every preset time. The preset time in this regard may be a regular time interval or a case where the viewer ratings of the broadcasting content and the web content are changed.

The processor 230 may request the server 100 to transmit the viewer rating metadata according to a user command. The server 100 may transmit the viewer rating metadata to the display apparatus 200 according to a request of the display apparatus 200.

The viewer rating metadata may include the channel list in which the broadcasting content and the web content are listed in order of viewer ratings and metadata regarding each content included in the channel list.

The metadata may include a title of broadcasting content, a broadcasting time, a channel number, a cast, a genre, a story, a preference, a program ID, etc. in case of the broadcasting content, and may include a title of the web content, a writer, a genre, a reproduction time, a preference, a content ID, a URL, etc. in case of the web content.

The channel list is a list in which the broadcasting content and the web content are united so that content is listed in order of high viewer ratings.

In this case, the processor 230 may display a channel number or a URL to which content is provided, a title, a preference, a broadcasting time, or a reproduction time, etc. on the channel list using metadata included in the viewer rating metadata and may access a channel to which the broadcasting content is provided and a web server (not shown) to which the web content is provided to display a preview screen of each piece of content on the channel list.

The processor 230 may display the content included in the channel list every preset time.

For example, the preset time may include a time when currently displayed content ends or the channel list is updated.

In more detail, when content currently being watched ends, the processor 230 may display content having the highest viewer rating among the content included in the channel list or may display content having a high viewer rating next to the content being watched that has ended.

When the channel list is updated and thus the content included in the channel list is changed, the processor 230 may display content having the highest viewer rating among the content included in the updated channel list.

Alternatively, the processor 230 may display content selected by a user among the content included in the channel list.

For example, the user may select the content from the channel list through a remote controller (not shown), and the processor 230 may display the content selected by the user.

In these cases, the processor 230 may display the content included in the channel list using the metadata included in the viewer rating metadata.

For example, since the metadata includes the channel number of the broadcasting content in the case of the broadcasting content, the processor 230 may determine a broadcasting channel through which broadcasting content that is to be displayed is broadcasted and may select the corresponding broadcasting channel to display the broadcasting content.

Since the metadata includes the URL to which the web content is provided in the case of the web content, the processor 230 may determine a URL to which web content that is to be displayed is provided, may access a web server (not shown) through the URL, and may download the web content to display the web content.

As described above, the processor 230 may automatically display the content included in the channel list when the content currently being watched ends or the channel list is updated, and, if the user selects the content from the channel list, may display the selected content. Whether the content is automatically converted may be set by the user.

The processor 230 may reflect a user's preference when displaying the channel list.

In this regard, the preference may include at least one of a genre, a region, a gender, and an age.

In more detail, the processor 230 may display the channel list by configuring the channel list such that only content reflecting the preference may be included in the channel list in order of viewer ratings.

For example, the processor 230 may display the channel list by configuring the channel list such that only content corresponding to a genre selected by the user may be included in the channel list in order of viewer ratings, only content provided in a region selected by the user may be included in the channel list in order of viewer ratings, or only content having a high preference in a gender and an age selected by the user may be included in the channel list in order of viewer ratings, based on the metadata received from the server 100.

As described above, the server 100 may calculate the viewer ratings of the broadcasting content and the web content based on the viewing information of the broadcasting content received from the display apparatus 200 and the viewing information of the web content received from the content provider and may generate the viewer rating metadata based on the calculated viewer ratings to transmit the viewer rating metadata to the display apparatus 100.

To this end, the processor 230 may determine broadcasting content that the user is watching through the display apparatus 200 based on the broadcasting metadata received from the server 100 and may transmit viewing information of the broadcasting content that the user is watching to the server 100.

In more detail, the processor 230 may determine broadcasting content that is currently displayed on the display apparatus 200 using the broadcasting time, the channel number, etc. included in the broadcasting metadata and may transmit a program ID of the broadcasting content that is currently displayed to the server 100 as viewing information of the broadcasting content.

Accordingly, the server 100 may determine the broadcasting content that is currently displayed on the display apparatus 200 based on the viewing information of the broadcasting content received from the display apparatus 200 and may calculate a viewer rating of the broadcasting content based on the determined broadcasting content.

The processor 230 may transmit information regarding the broadcasting content displayed on the display apparatus 200 to the server 100 every preset time.

In this regard, the preset time may be a regular time interval or may be a time when broadcasting content that users watch through the display apparatus 200 is changed.

That is, since the viewer rating of the broadcasting content may be changed in real time, the processor 230 may determine broadcasting content displayed every regular time interval or whenever the broadcasting content that users watch is changed and may transmit viewing information of the determined broadcasting content to the server 100.

If the processor 230 receives updated viewer rating metadata from the server 100, the processor 230 may display an updated channel list included in the updated viewer rating metadata.

In more detail, the server 100 may receive the viewing information of the broadcasting content and the web content every preset time to update the viewer ratings of the broadcasting content and the web content and may generate the viewer rating metadata based on the updated viewer ratings to transmit the generated viewer rating metadata to the display apparatus 200.

Therefore, if the processor 230 receives the updated viewer rating metadata from the server 100, the processor 230 may remove the existing displayed channel list and display the channel list included in the updated viewer rating metadata to update the channel list in accordance with viewer ratings at a current time.

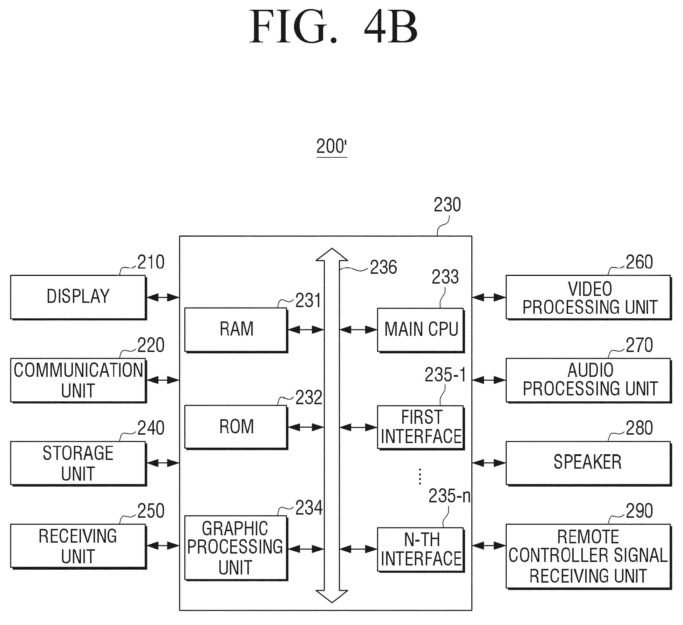

FIG. 4B is a block diagram for describing a configuration of the display apparatus 200' according to another exemplary embodiment. Referring to FIG. 4B, the display apparatus 200' may include the display 210, the communication unit 220, the processor 230, a storage unit 240, a receiving unit 250, an audio processing unit 260, a video processing unit 270, a speaker 280, and a remote controller signal receiving unit 290. Detailed descriptions of constitutional elements illustrated in FIG. 4B that are redundant with constitutional elements in FIG. 4A are omitted.

The processor 230 may generally control an operation of the display apparatus 200.

In more detail, the processor 230 may include a RAM 231, a ROM 232, a main CPU 233, a graphic processing unit 234, first through n-th interfaces 235-1~235-n, and a bus 236.

The RAM 231, the ROM 232, the main CPU 233, the graphic processing unit 234, and the first through n-th interfaces 235-1~235-n may be connected to each other through the bus 236.

The first through n-th interfaces 235-1~235-n may be connected to the above-described constitutional elements.

The main CPU 233 may access the storage unit 240 to perform booting using an operating system (O/S) stored in the storage unit 240. The main CPU 233 may perform various operations using various programs, data, etc. that are stored in the storage unit 240.

The ROM 232 may store a set of command languages, etc. for booting a system. If a turn-on command is input and thus power is applied, the main CPU 233 may copy the OS stored in the storage unit 240 to the RAM 231 according to the command language stored in the ROM 232 and may execute the O/S to boot the system. If the system is completely booted, the main CPU 233 may copy various application programs stored in the storage unit 240 to the RAM 231 and may execute the application programs copied in the RAM 231 to perform various operations.

The graphic processing unit 234 may generate a screen including various objects such as icons, images, text, etc. using an arithmetic operation unit (not shown) and a rendering unit (not shown). The arithmetic operation unit (not shown) may calculate attribute values such as a coordinate value, a shape, a size, a color, etc. in which each of objects is to be displayed according to a layout of the screen based on a received control command. The rendering unit (not shown) may generate a screen of various layouts including the objects based on the attribute values calculated by the arithmetic operation unit (not shown). The screen generated by the rendering unit (not shown) may be displayed in a display area of the display 210.

The above-described operations of the processor 230 may be performed through the programs stored in the storage unit 240.

The storage unit 240 may store an O/S software module and various pieces of data for driving the display apparatus 200.

The receiving unit 250 may receive broadcasting content. The broadcasting content may include images, audio, and additional data (for example, an EPG). The receiving unit 250 may receive the broadcasting content from various sources such as terrestrial broadcasting, cable broadcasting, satellite broadcasting, Internet broadcasting, etc.

For example, the receiving unit 250 may be implemented to include an element such as a tuner (not shown), a demodulator (not shown), an equalizer (not shown), etc. for receiving the broadcasting content transferred from a broadcasting station.

The video processing unit 260 may perform processing on video data. In more detail, the processor 230 may control the video processing unit 260 to process the video data of various pieces of content provided through the communication unit 220 and the receiving unit 250 and display the video data through the display 210.

For example, the video processing unit 260 may perform processing such as decoding, scaling, frame rate conversion, etc. on the video data to perform signal processing on an image constituting content in a printable form in the display 210.

The audio processing unit 270 may perform processing on audio data. In more detail, the processor 230 may control the audio processing unit 270 to output audio data of various pieces of content provided by the communication unit 220 and the receiving unit 250 through the speaker 280.

For example, the audio processing unit 270 may perform signal processing such as decoding on the audio data to perform signal processing audio constituting content in a printable form in the speaker 280.

The speaker 280 may convert an audio signal output by the audio processing unit 270 into sound and may output the sound.

The remote controller signal receiving unit 290 may receive a remote controller control signal, for example, a channel conversion command, etc. that is input from a remote controller (not shown).

In particular, the remote controller signal receiving unit 290 may receive the remote controller control signal for selecting content present on a channel list displayed on the display 210. In this case, the processor 230 may control the remote controller signal receiving unit 290 to display the content selected according to the received remote controller control signal.

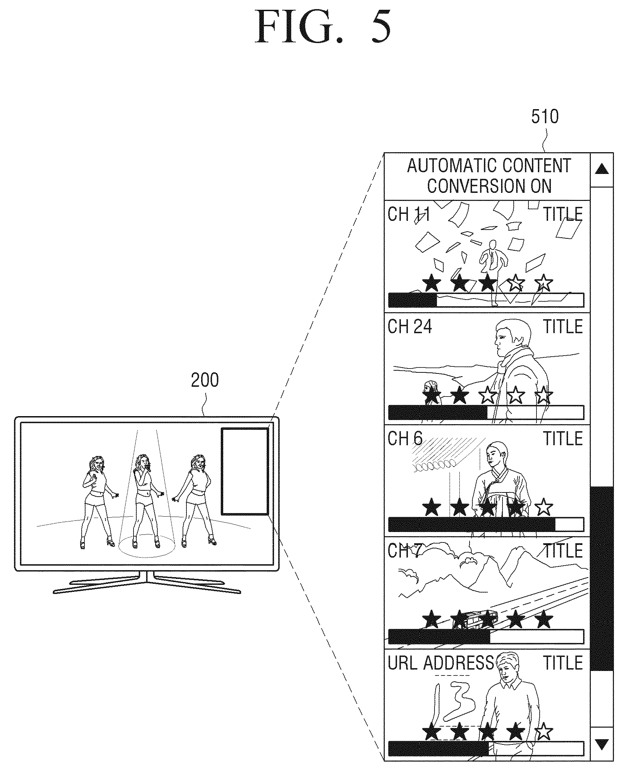

FIG. 5 is a diagram of a channel list 510 according to an exemplary embodiment.

Referring to FIG. 5, the display apparatus 200 may display the channel list 510 on an area of a screen that displays content.

In this case, the channel list 510 may display currently provided broadcasting content and web content in order of high viewer ratings and may display a channel number of each pieces of content or a URL address, a title, a preference, and a preview screen.

For example, as shown in FIG. 5, content may be displayed in order of broadcasting content provided in a "CH 11", broadcasting content provided in a "CH 24", broadcasting content provided in a "CH 6", broadcasting content provided in a "CH 7", and web content provided in a "URL address", and the title, the preference ★, and the preview screen for each piece of the content may be together displayed.

A user may confirm content having a high viewer rating next to content displayed on the channel list 510 through a scroll bar provided on the channel list 510.

The channel list 510 may display a graphic user interface (GUI) for confirming whether automatic content conversion is set.

In this regard, automatic content conversion indicates automatic display of content included in the channel list 510 every preset time and may be set by the user.

For example, when automatic content conversion is set, as shown in FIG. 5, the channel list 510 may display the GUI indicating that automatic content conversion has been set such as "automatic content conversion ON".

In this case, the display apparatus 200 may display the content included in the channel list 510 at a time when content currently being watched ends or at a time when the channel list 510 is updated.

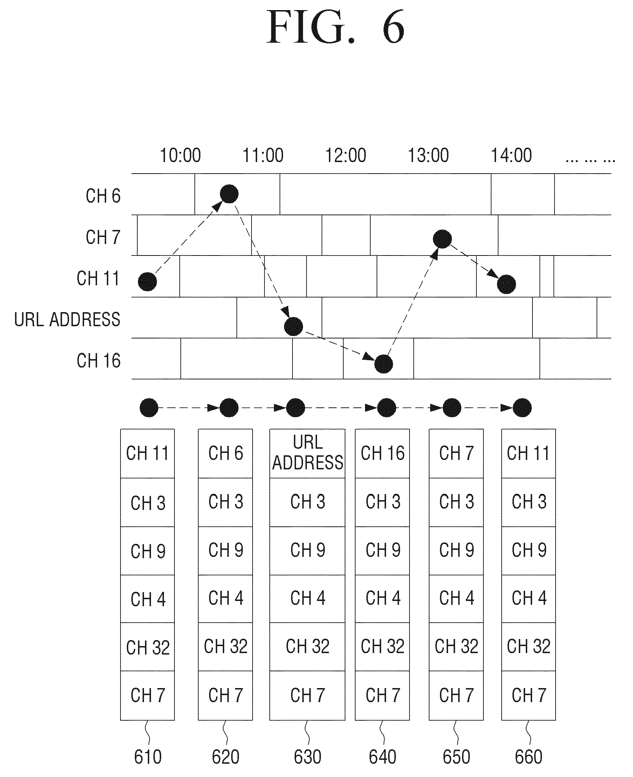

FIG. 6 is a diagram for describing an example of performing automatic content conversion according to an exemplary embodiment.

It is assumed in FIG. 6 for convenience of description that automatic content conversion is set whereby content is changed and displayed at a time whenever a channel list is updated.

Referring to FIG. 6, when the display apparatus 200 receives updated viewer rating metadata, the display apparatus 200 may sequentially display updated channel lists 610, 620, 630, 640, 650, and 660.

In this case, content having the highest viewer rating in each of the channel lists 610, 620, 630, 640, 650, and 660 may be displayed at a time whenever the channel lists 610, 620, 630, 640, 650, and 660 are updated based on the updated channel lists 610, 620, 630, 640, 650, and 660.

For example, in FIG. 6, the display apparatus 200 may change displayed content in order of broadcasting content provided in a "CH 11", broadcasting content provided in a "CH 6", web content provided in a "URL address", broadcasting content provided in a "CH 16", broadcasting content provided in a "CH 7", and web content provided in a "CH 11" that are content having the highest viewer rating respectively in the channel lists 610, 620, 630, 640, 650, and 660 at the time whenever the channel lists 610, 620, 630, 640, 650, and 660 are updated.

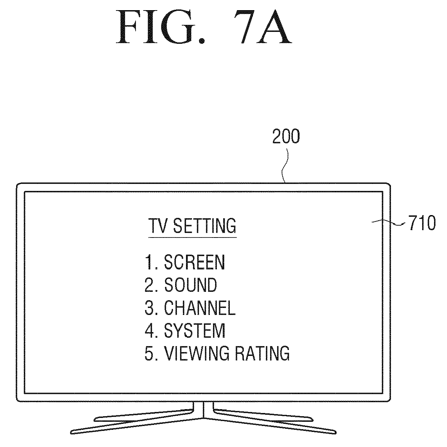

FIGS. 7A through 7C are diagrams for describing a method of setting a channel list according to exemplary embodiments.

Referring to FIG. 7A, the display apparatus 200 may display a set menu 710 according to a user command. In this case, the set menu 710 may include a menu for setting a screen, sound, a channel, a system, and a viewer rating.

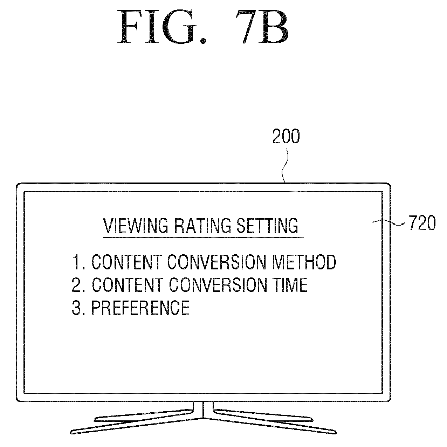

If the viewer rating is selected on the set menu 710, as shown in FIG. 7B, a menu 720 for setting a channel list generated based on the viewer rating may be displayed.

Referring to Fig. 7B, the menu 720 for setting the channel list may include a menu for setting a content conversion method, a content conversion time, and a preference.

In this regard, the menu for setting the content conversion method is a menu for setting whether to automatically display content included in the channel list or display content selected by a user from the channel list. The user may select and set "real time automatic" or "manual" from the corresponding menu.

The menu for setting the content conversion time is a menu for setting a time when the content included in the channel list is automatically displayed when the content conversion method is set as 'real time automatic". The user may select "immediately" or "after the content ends" from the corresponding menu and may set a time when the channel list is updated or a time when currently displayed content ends as the content conversion time.

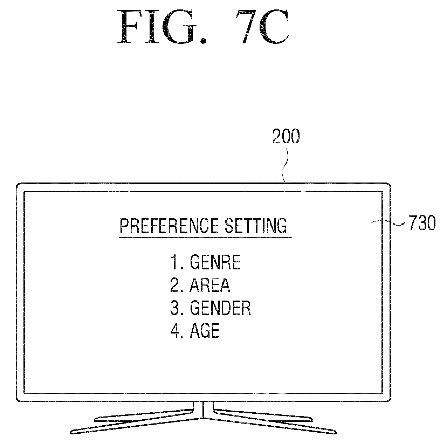

The menu for setting the preference is a menu for setting a user's preference reflected when the channel list is displayed. If the menu for setting the preference is selected, the display apparatus 200 may display a preference set menu 730 as shown in FIG. 7C.

Referring to FIG. 7C, the preference set menu 730 may include a menu for setting a genre, an area, a gender, and an age. The user may allow only content desired by the user to be displayed on the channel list through the preference set menu 730.

For example, the user may select at least one of various genres (for example, news, movie, music, sports, etc.) through a genre menu and may allow only content having a genre desired by the user to be included in the channel list in order of viewer ratings.

The user may select at least one of various areas (for example, Seoul, Gyounggi, Incheon, Daejeon, etc.) through an area menu and may allow only content provided in an area desired by the user to be included in the channel list in order of viewer ratings.

The user may select at least one of various genders (for example, male and female) through a gender menu and may allow only content having a high preference in a gender desired by the user to be included in the channel list in order of viewer ratings.

The user may select at least one of various ages (for example, 10's, 20's, 30's, 40's, etc.) through an age menu and may allow only content having a high preference in an age desired by the user to be included in the channel list in order of viewer ratings.

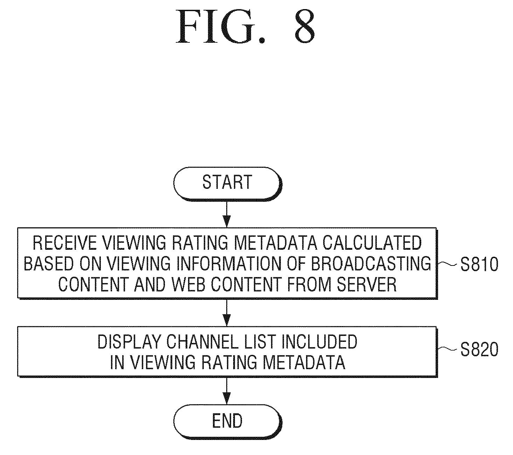

FIG. 8 is a flowchart of a method in which a display apparatus displays a channel list according to an exemplary embodiment.

Viewer rating metadata calculated based on viewing information of broadcasting content and web content is received from a server (operation S810).

Thereafter, a channel list included in the viewer rating metadata is displayed (operation S820). In this regard, the broadcasting content and the web content are listed in order of viewer ratings in the channel list.

In operation S820, when updated viewer rating metadata is received from the server, an updated channel list included in the updated viewer rating metadata may be displayed.

Broadcasting content that a user is watching may be determined through the display apparatus based on broadcasting metadata received from the server. Viewing information of the broadcasting content that the user is watching may be transmitted to the server.

In this case, the server may calculate viewer ratings of the broadcasting content and the web content based on the viewing information of the broadcasting content received from the display apparatus and viewing information of the web content received from a content provider and may generate viewer rating metadata based on the calculated viewer ratings to transmit the generated viewer rating metadata to the display apparatus.

In operation S820, content included in the channel list may be displayed every preset time.

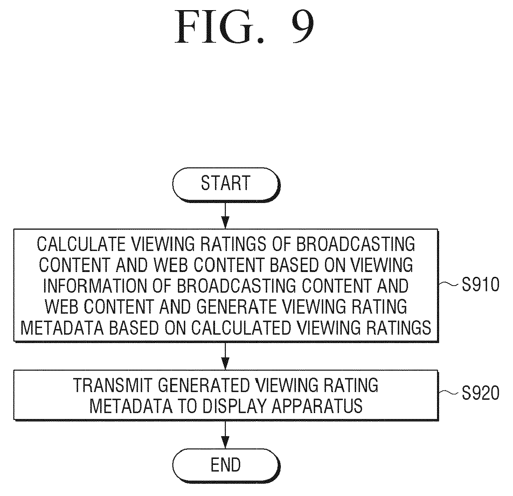

FIG. 9 is a flowchart of a control method performed by a server according to an exemplary embodiment.

Viewer ratings of broadcasting content and web content may be calculated based on viewing information of the broadcasting content and the web content, and viewer rating metadata may be generated based on the calculated viewer ratings (operation S910). In this regard, the viewer rating metadata may include a channel list in which the broadcasting content and the web content are listed in order of viewer ratings.

Thereafter, the generated viewer rating metadata may be transmitted to a display apparatus (operation S920).

In operation S910, the viewer ratings may be calculated based on viewing information of the broadcasting content received from the display apparatus and viewing information of the web content received from a content provider.

In more detail, broadcasting content that is currently being watched in the display apparatus may be determined based on the viewing information of the broadcasting content and previously stored broadcasting metadata to calculate a viewer rating of the broadcasting content, viewer ratings of the web content may be calculated based on the viewing information of the web content, and viewer rating metadata may be generated based on the calculated viewer ratings of the broadcasting content and the web content.

If the viewing information of the broadcasting content and the web content is updated, the viewer rating metadata may be updated based on the updated viewing information, and the updated viewer rating metadata may be transmitted to the display apparatus.

A non-transitory computer readable storage medium having stored thereon computer program instructions which sequentially perform the method of displaying a channel list performed by a display apparatus and the control method performed by a server according to exemplary embodiments may be provided.

As an example, a non-transitory computer readable storage medium having stored thereon computer program instructions which perform operations of receiving viewer rating metadata calculated based on viewing information of broadcasting content and web content from a server and displaying a channel list included in the viewer rating metadata may be provided.

As another example, a non-transitory computer readable storage medium having stored thereon computer program instructions which perform operations of calculating viewer ratings of broadcasting content and web content based on viewing information of the broadcasting content and the web content and generating viewer rating metadata based on the calculated viewer ratings and transmitting the generated viewer rating metadata to a display apparatus may be provided.

The non-transitory computer readable storage medium refers to a medium where data can be stored semi-permanently and is readable by a device, and not a medium which stores data for a short period of time such as a register, cache, and memory etc. More specifically, the aforementioned various applications or programs may be stored in and provided by non-transitory computer readable medium such as a CD, DVD, hard disk, blue ray disk, USB, memory card, and ROM etc.

In one or more exemplary embodiments, Processes, functions, methods, programs, applications, and/or software in apparatuses described herein may be recorded, stored, or fixed in one or more non-transitory computer-readable media (computer readable storage (recording) media) that includes program instructions (computer readable instructions) to be implemented by a computer to cause one or more processors to execute (perform or implement) the program instructions. The media may also include, alone or in combination with the program instructions, data files, data structures, and the like. The media and program instructions may be those specially designed and constructed, or they may be of the kind well-known and available to those having skill in the computer software arts. Examples of non-transitory computer-readable media include magnetic media, such as hard disks, floppy disks, and magnetic tape; optical media such as CD ROM disks and DVDs; magneto-optical media, such as optical disks; and hardware devices that are specially configured to store and perform program instructions, such as read-only memory (ROM), random access memory (RAM), flash memory, and the like. Examples of program instructions include machine code, such as produced by a compiler, and files containing higher level code that may be executed by the computer using an interpreter. The program instructions may be executed by one or more processors. The described hardware devices may be configured to act as one or more software modules that are recorded, stored, or fixed in one or more non-transitory computer-readable media, in order to perform the operations and methods described above, or vice versa. In addition, a non-transitory computer-readable medium may be distributed among computer systems connected through a network and program instructions may be stored and executed in a decentralized manner. In addition, the computer-readable media may also be embodied in at least one application specific integrated circuit (ASIC) or Field Programmable Gate Array (FPGA).

Although a bus is not shown in a block diagram that illustrates a display apparatus and a server, communication between constitutional elements of the display apparatus may be conducted through the bus. Each device may further include a processor such as a CPU, a micro-processor, etc. that performs various operations described above.

As described above, according to one or more exemplary embodiments of the present disclosure, users may be provided with broadcasting content and web content having high viewer ratings according to viewer ratings calculated in real time.

Although a few exemplary embodiments have been shown and described, it would be appreciated by those skilled in the art that changes may be made in these exemplary embodiments without departing from the principles of the disclosure, the scope of which is defined in the claims and their equivalents.

## Claims

1. A display apparatus comprising:
a display;
a communication unit configured to communicate with a server; and
a processor configured to control the display to display a channel list included in viewer rating metadata, if viewer rating metadata calculated based on viewing information of broadcasting content and web content is received from the server,
wherein the viewer rating metadata includes viewer ratings, and
wherein the channel list lists the broadcasting content and the web content in order of viewer ratings.

2. The display apparatus as claimed in claim 1, wherein, if updated viewer rating metadata is received from the server, the processor is configured to control the display to display an updated channel list included in the updated viewer rating metadata.

3. The display apparatus as claimed in claim 1 or 2, wherein the processor is configured to determine broadcasting content that a user is watching through the display apparatus based on broadcasting metadata received from the server and transmits viewing information of the broadcasting content that the user is watching to the server.

4. The display apparatus as claimed in claim 3, wherein the server is configured to calculate viewer ratings of the broadcasting content and the web content based on viewing information of the broadcasting content received from the display apparatus and viewing information of the web content received from a content provider and generates the viewer rating metadata based on the calculated viewer ratings to transmit the viewer rating metadata to the display apparatus.

5. The display apparatus as claimed in anyone of claims 1 to 4, wherein the processor is configured to control the display to display content included in the channel list every preset time.

6. A server comprising:
a communication unit configured to communicate with a display apparatus; and
a processor configured to calculate viewer ratings of broadcasting content and web content based on viewing information of the broadcasting content and the web content and configured to generate viewer rating metadata based on the calculated viewer ratings to transmit the generated viewer rating metadata to the display apparatus through the communication unit,
wherein the viewer rating metadata includes viewer ratings, and
wherein the viewer rating metadata comprises a channel list in which the broadcasting content and the web content are listed in order of viewer ratings.

7. The server as claimed in claim 6, wherein the processor is configured to calculate viewer ratings based on the viewing information of the broadcasting content received from the display apparatus and the viewing information of the web content received from a content provider.

8. The server as claimed in claim 6 or 7, wherein the processor is configured to determine broadcasting content that is currently being watched in the display apparatus based on the viewing information of the broadcasting content and previously stored broadcasting metadata to calculate a viewer rating of the broadcasting content, to calculate a viewer rating of the web content based on the viewing information of the web content, and to generate a viewer rating metadata based on the calculated viewer ratings of the broadcasting content and the web content.

9. The server as claimed in anyone of claims 6 to 8, wherein, if the viewing information of the broadcasting content and the web content is updated, the processor is configured to update the viewer rating metadata based on the updated viewing information and transmits the updated viewer rating metadata to the display apparatus.

10. A method of displaying a channel list performed by a display apparatus, the method comprising:
receiving viewer rating metadata calculated based on viewing information of broadcasting content and web content from a server; and
displaying the channel list included in the viewer rating metadata,
wherein the viewer rating metadata includes viewer ratings, and
wherein the channel list lists the broadcasting content and the web content in order of viewer ratings.

11. The method as claimed in claim 10, wherein, if updated viewer rating metadata is received from the server, the displaying comprises displaying an updated channel list included in the updated viewer rating metadata.

12. The method as claimed in claim 10 or 11, further comprising determining broadcasting content that a user is watching through the display apparatus based on broadcasting metadata received from the server and transmitting viewing information of the broadcasting content that the user is watching to the server.

13. The method as claimed in claim 12, wherein the server calculates viewer ratings of the broadcasting content and the web content based on viewing information of the broadcasting content received from the display apparatus and viewing information of the web content received from a content provider and generates the viewer rating metadata based on the calculated viewer ratings to transmit the generated viewer rating metadata to the display apparatus.

14. The method as claimed in anyone of claims 10 to 13, wherein the displaying comprises displaying content included in the channel list every preset time.
